# EUROPEAN PATENT APPLICATION

(11) **EP 0 734 839 A2**
(43) Date of publication of application: **02.10.1996**
(21) Application number: 96104998.8
(22) Date of filing: 28.03.1996
(51) Int. Cl.: B29C 51/32, B29C 51/44, B29C 51/10, B29C 51/16

(54) **Mold for producing a film-coated formed article and method for removing the article from the mold during a fusing cutting operation**

(30) Priority: 31.03.1995 JP 100145/95
(71) Applicant: SINTOKOGIO, LTD., Nagoya-shi, Aichi Prefecture (JP)
(72) Inventor: Makiguchi, Naoshi, Otowa-cho, Hoi-gun (JP)
(74) Representative: Behrens, Dieter, Dr.-Ing.

(57) **Abstract**

A receiving device and a method are disclosed for safely taking out a film-coated formed component after it is trimmed by fusing wherein both edges of the residual outer part of the coating-film and the inner part of it do not adhere to a fusing heat-emissive body (3). The method includes the steps of applying electricity to the electric heat-emissive body and fusing the coating-film of the component along the periphery of the component, separating a outer residual part of the fused coating-film from the heat-emissive body, separating the film of the film-coated formed component from the heat-emissive body, and taking the fused film-coated formed component out of the receiving mold after stopping the electricity to the heat-emissive body.

## Description

### Field of the Invention

This invention relates to a method for fusing the peripheral edge of a coating-film of a film-coated formed component on the upper surface of a receiving mold and for taking the film-coated formed component out of the receiving mold, and also relates to a receiving mold device.

### Description of the Prior Art

Conventionally, a formed component used for the interior of a vehicle is coated by a film or the like for ornamentation, or to prevent a foamed resin, which is used in a subsequent process, from entering the inner part of the component. A method for producing such a film-coated formed component includes the steps of setting an air-permeable formed component on the surface of a receiving mold having an electric heat-emissive body mounted on the surface, gluing a film onto the surface of the formed component by means of vacuum forming, trimming the peripheral edge of the coating film by fusing it by heating the heat-emissive body, and then stopping the heating of it and manually taking the film-coated formed component from the receiving mold.

In this method, however, if the heating of the heat-emissive body is stopped, the edge of the fused film tends to adhere to the heat-missive body. This causes a problem in that if the film adhering to the heat-emissive body is pulled off of it, the film is separated from the formed component.

To eliminate such a problem, the body can be continued to be heated until the film-coated formed component is taken out. However, this is not actually done because of workers' safety, as they must manually take out the component under the heated heat-emissive body. The present invention is made in view of this problem. It aims to provide a method and a receiving mold device to safely take out the component wherein neither the edges of the residual outer part of the film nor the inner part of it adheres to the heat-emissive body.

### Summary of the Invention

The method of the present invention for fusing a peripheral edge of a film-coated formed component placed on an upper surface of a receiving mold having an electric heat-emissive body on the upper surface and taking out the film-coated formed component from the receiving mold comprises the steps of applying electricity to the electric heat-emissive body to heat it and fusing the coating-film of the component along the periphery of the component, separating an outer residual part of the fused coating-film from the receiving mold and therefore separating the edge of the outer residual part from the heat-emissive body, pushing up the film-coated formed component by raising means from the receiving mold, thereby separating the edge of the inner part of the film from the heat-emissive body, stopping the electricity to the heat-emissive body, and after so stopping the electricity taking the fused film-coated formed component out of the receiving mold. Further, the receiving mold device of the present invention includes a frame having a suction pipe to communicate with a suction source, a receiving mold fixedly mounted on an upper part of the frame, thereby defining a chamber at the back of the receiving mold, the receiving mold having an electric heat-missive body mounted on an upper surface of the mold at a peripheral edge of the mold, the receiving mold having a plurality of suction throughbores therein, a plurality of vertically movable lifting pins penetrating the receiving mold, and raising means attached to the back of the receiving mold and connected to the pins for vertically moving the pins.

By means of the structure of the invention mentioned above, after the edge of the residual outer part of the film and the edge of the inner part (component side) of the film are separated from the electric heat-emissive body, heating of the heat-emissive body is stopped. Thus no fused film adheres to the heat-emissive body. Further, a worker can safely take out the component after the heating is stopped.

### Brief Description of the Drawing

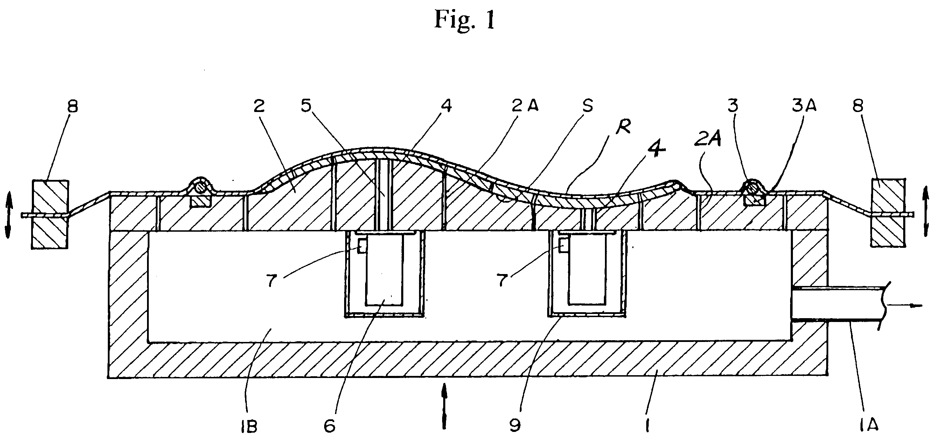

Fig. 1 is a sectional view of the embodiment of the present invention, showing a film-coated formed component just prior to trimming.

### Description of the Preferred Embodiment

The embodiment of the present invention will now be explained in detail by referring to the accompanying drawing. A box-like frame 1 has at one side of it a suction pipe 1A, which is connected to a suction source (a vacuum pump). A receiving mold 2 is fixedly placed on the frame 1, thereby defining a chamber 1B at the back of the mold 2.

The receiving mold 2 is formed with a plurality of suction throughbores 2A, 2A. An annular electric heat-emissive body, which is analogous to the circumference of a formed component S, is disposed on the peripheral part of the mold 2 through a heat-resistant body 3A.

The receiving mold 2 is formed with other throughbores 4, 4 that are located at any suitable positions. A raising pin 5 is inserted in each throughbore 4, and the lower end of the pin 5 is connected to a raising device 6, comprised of a vertical cylinder, which is attached to the back of the mold 2. Each raising device 6 is provided with a sensor 7 to detect the upward movement of the raising pin 5. Numerals 8, 8 in the drawing denote clampers to hold a coating-film R, and 9 denotes a sealing box which sealingly covers each raising device 6. Although in the drawing suction throughbores 2A, 2A are each of an upright type, they may be cancellous ones. Since the heat-emissive body 3 must be quickly heated or it will quickly become cool, it is comprised of a wire or strip of nickel-chrome alloy, iron-chrome alloy, or nickel-chrome-iron allow without a sheath (i.e., the wire or strip is exposed). Preferably, for easier placing and forming, the heat-emissive body is a wire 1 - 5 mm in diameter. Further, a rack and pinion may be used as a raising device instead of a vertical cylinder.

Further, the formed component S is an air-permeable one made by pressing wood fibers or made of PP (polypropylene) or an ABS resin having throughbores of 0.5 - 1.0 mm ⌀ (this embodiment). Further, the coating-film is a plastic sheet or film, and it may have colors or patterns.

By the structure described above the operation to take the film-coated formed component out of the receiving mold by fusing or melting the film will now be explained.

The receiving mold device, comprised of the flame 1 and the receiving mold 2, is located in a position that is lower than that in Fig. 1. A formed component S is set on the surface of the mold 2, and an adhesive is then applied to the upper surface of the component S. The coating-film, which is held by the clampers 8, 8 and is softened by heat, is positioned above the receiving mold device by moving the clampers 8, 8. The pipe 1A is then made to communicate with the suction source (not shown) to apply suction force to the surface of the formed component S, while the receiving mold device is raised, thereby sucking and gluing the coating-film R onto the surface of the formed component S. This state is shown in Fig. 1.

Then, electricity is applied to the heat-emissive body 3 to fuse (or trim) the coating-film R alongside the circumference of the formed component S, while the communication is disconnected between the suction pipe 1A and the suction source. The receiving mold device is then lowered to separate the residual part of the film R from the receiving mold 2 and to separate the edge of the residual part from the upper part of the heat-emissive body 3. After this, the raising devices 6, 6 operate to push up the pins 5, 5 to separate the film-coated formed component from the mold 2 and to separate the annular edge of the film R from the heat-emissive body 3. This raising or separation of the film R from the body 3 is confirmed by the sensor 7, and the electricity to the body 3 is stopped to cool it quickly. After this, the film-coated formed component is manually taken out of the mold.

Preferably, the electric heat-emissive body 3 is a component including more than 77% of nickel, chrome 19 - 22%, and less than 1% of iron, in view of its bending workability and inferiority under high temperatures. Further, instead of the sensors 7, 7, which are directly attached to the raising devices 6, 6 to detect their operation, limit switches or the like may be placed on the surface of the receiving mold to detect the presence of the formed component on the receiving mold.

As explained above, in the present invention, after the film-coated formed component is trimmed by fusing, the edge of the residual outer part of the film and the edge of the inner part (component side) of the film are separated from the electric heat-emissive body. Then the electricity to the heat-emissive body is stopped, and the component is taken out of the mold. Thus this method enables eliminating the problems caused by the melted film adhering to the heat-emissive body, and allows the user to safely take out the film-coated formed component from the receiving mold.

## Claims

1. A method for fusing a peripheral edge of a film-coated formed component placed on an upper surface of a receiving mold having an electric heat-emissive body on the upper surface and taking out the film-coated formed component from the receiving mold, comprising the steps of:
applying electricity to the electric heat-emissive body to heat the body and fusing the coating-film of the component along the periphery of the component;
separating an outer residual part of the fused coating-film from the receiving mold and therefore separating the edge of the outer residual part from the heat-emissive body;
pushing up the film-coated formed component by raising means from the receiving mold, thereby separating the edge of the inner part of the film from the heat-emissive body;
stopping the electricity to the heat-emissive body; and
after stopping the electricity, taking the fused film-coated formed component out of the receiving mold.

2. A receiving mold device, comprising:
a frame (1) having a suction pipe (1A) to communicate with a suction source;
a receiving mold (2) fixedly mounted on an upper part of the frame, thereby defining a chamber (1B) at the back of the receiving mold, the receiving mold having an electric heat-emissive body (3) mounted on an upper surface of the mold at a peripheral edge of the mold, the receiving mold having a plurality of suction throughbores (2A, 2A) therein;
a plurality of vertically movable lifting pins (5, 5) penetrating the receiving mold; and
raising means (6) attached to the back of the receiving mold and connected to the pins for vertically moving the pins.

3. The device of claim 2, wherein the flame is vertically movable.

4. The device of claim 2, wherein the electric heat-emissive body comprises a wire including one of nickel-chrome alloy, iron-chrome alloy, and nickel-chrome-iron alloy.

5. The device of claim 3, wherein the electric heat-emissive body comprises a wire including one of nickel-chrome alloy, iron-chrome alloy, and nickel-chrome-iron alloy.
